## Europäisches Patentamt

## European Patent Office

## Office européen des brevets

(19)

(11) Publication number: **0 124 273**
**B1**

(12) **EUROPEAN PATENT SPECIFICATION**

(45) Date of publication of patent specification: **19.08.87**

(51) Int. Cl.⁴: **C 08 F 220/14** // (C08F220/14, 222:06, 212:08)

(21) Application number: **84302180.9**

(22) Date of filing: **30.03.84**

(54) Copolymer containing methylmethacrylate units and its use in sheet material.

(30) Priority: **31.03.83 US 481025**

(43) Date of publication of application:
**07.11.84 Bulletin 84/45**

(45) Publication of the grant of the patent:
**19.08.87 Bulletin 87/34**

(84) Designated Contracting States:
**AT BE CH DE FR GB IT LI LU NL SE**

(56) References cited:
**NL-A-6 605 289**

**CHEMICAL ABSTRACTS, Vol. 98, No. 12, March 1983, page 13, abstract no. 90103m, COLUMBUS, OHIO, (US).**

(73) Proprietor: **Rohm and Haas Company
Independence Mall West
Philadelphia, Pennsylvania 19105 (US)**

(72) Inventor: **Cunningham, Robert Ervin
R.D. No. 1 Box 33C
New Hope, Pa. 18938 (US)**
Inventor: **Berzinis, Albin Peter
25 Knotty Oak Drive
Medford, N.J. 08055 (US)**

(74) Representative: **Angell; David Whilton et al
Rohm and Haas Company Patent Department
Chesterfield House Bloomsbury Way
London WC1A 2TP (GB)**

Courier Press, Leamington Spa, England.

## Description

This invention concerns copolymer containing methylmethacrylate units and its use in sheet material.

This invention is more specifically concerned with acrylic sheet compositions which may be prepared by cast polymerisation and which have improved resistance to thermal relaxation, for example, a cast sheet comprising copolymer containing a major amount of methylmethacrylate units and a minor amount of maleic anhydride and styrene units. In a preferred embodiment a cast sheet can be prepared therefrom to meet the thermal relaxation requirements of aircraft glazing applications.

Cast plastic sheet must possess certain physical property specifications to be useful for aircraft glazing applications. These physical property specifications are set forth in military specifications, MIL-P-8184 B and MIL-P-25690 A. An important physical property of a cast plastic sheet for aircraft glazing is the ability of a stretched sheet to resist thermal relaxation upon heating and cooling. MIL-P-25690 A requires that a cast sheet, which has been biaxially stretched to one third of its original thickness, must have a percent thermal relaxation less than ten at 110°C and greater than 40 at 145°C.

The thermal relaxation of cast sheet is related to the glass transition temperature (Tg) and heat distortion temperature (HDT) of the cast sheet. In order for a cast sheet to meet the thermal relaxation specifications for aircraft glazing applications, the stretched sheet must have a sufficiently high glass transition temperature so that the sheet does not appreciably flow at 110°C, but not so high that the sheet cannot flow at 145°C.

Cast polymethylmethacrylate sheet has a glass transition temperature (Tg) which ranges from about 100°C to 105°C. This Tg is too low for a cast polymethylmethacrylate sheet to meet the thermal relaxation requirements for aircraft glazing applications. As a result, various types and amounts of comonomers such as methacrylamide, methacrylic acid, isobornylmethacrylate, methylene bis methacrylamide, glycidylmethacrylate, alpha-chloromethyl methacrylate, methyl alpha cyanoacrylate and alpha methyl styrene, and/or crosslinking agents such as allylmethacrylate, 1,3-butane dioldimethacrylate, 1,4-butane dioldimethacrylate, trimethylol propane trimethacrylate, ethylene glycol dimethacrylate, poly(ethylene)glycol dimethacrylate, 1,6-hexanedioldimethacrylate and tetraethylene glycol dimethacrylate, having higher glass transition temperatures than polymethylmethacrylate, have been incorporated into polymethylmethacrylate to raise the Tg or HDT of the cast sheet.

One of the conventional comonomers used in crosslinked acrylic polymers used for aircraft glazing applications is methacrylamide. Methacrylamide has a number of drawbacks, in addition to its high cost, as a comonomer for glazing cast sheet. Methacrylamide is a solid at room temperature and requires heating to at least 40°C to dissolve in methylmethacrylate monomer. Even in its dissolved state, methacrylamide is only partially soluble in methylmethacrylate monomer. This partial solubility typically results in a cast sheet having an undesirable yellow edge color. In addition, methacrylamide monomer may homopolymerize, forming polymethacrylamide. This homopolymer and any unreacted methacrylamide monomer must be removed, as by filtration, prior to sheet casting in order to prevent the formation of surface imperfections in the resulting cast sheet. Furthermore, certain crosslinking agents which have been conventionally used to crosslink the copolymer during a shrinking or post curing step, to improve the stress solvent crazing performance of the cast sheet, have been found to be potential health hazards.

Researchers have found that the service temperature of polymethylmethacrylate used as a molding powder for molding applications can be improved by the formation of compatible polymer blends or alloys of polymethylmethacrylate and other co- and ter-polymers.

U.S. Patent No. 4,129,614 is directed to a thermoplastic molding composition prepared by heat blending polymethylmethacrylate with a terpolymer of a rubbery block copolymer containing predominantly butadiene, styrene, and maleimide. The rubbery block copolymer is used to increase the strength of the molding composition while the maleimide is used to increase the softening temperature. The resulting thermoplastic molding composition has the combination of low viscosity, to permit molding, stiffness, and a high softening point.

U.S. Patent Nos. 4,129,615 and 4,129,619 are also directed to thermoplastic molding compositions which are compatible polymer blends of polymethylmethacrylate and styrene/maleimide copolymers and terpolymers.

None of these thermoplastic molding compositions is suitable for casting a clear sheet which satisfies the requirements of aircraft glazing applications. The conventional molding copolymers or terpolymers are not soluble in methylmethacrylate monomer. As a result, cast sheet prepared from such polymeric alloy molding compositions contain two phases, a hard glassy phase and a rubbery phase. Depending on the size of the particles and the refractive indices of the two polymers, the resulting composition will be either opaque or exhibit a temperature-hazing phenomenon. In either case, if the molding composition were to be used to prepare a cast sheet, the cast sheet would not be clear over the range of temperatures required for aircraft glazing applications.

Light scattering increases with the particle size of the polymers and is proportional to the square of the difference between the refractive index of the two polymers. The refractive index of the materials is also a function of temperature. The refractive index of a rubbery polymer changes much more rapidly with temperature than that of a glassy polymer. Haze results from this light scattering and is a parabolic function of temperature, i.e. the haze is at a minimum at one temperature and rapidly increases with slight

2

temperature changes above and below the minimum haze temperature. The percent haze for such a polymer as a function of temperature is expressed by the following formula:

$$\% \ Haze = H_0 + Q(T_0 - T)^2$$

where
$H_0$ is the minimum haze value,
$Q$ is the measure of the parabolic curvature, and
$T_0$ is the minimum haze temperature.

The minimum haze temperature $(T_0)$ is the temperature at which the difference in the refractive indices of the two phases is at a minimum and the haze is at its minimum value $H_0$. Theoretically, it is possible for the minimum haze, at the minimum haze temperature, to be so low that a clear sheet can be prepared; however, the Q value will be high and the percentage of haze will increase rapidly as the temperature (T) changes only slightly from the minimum haze temperature $(T_0)$.

U.S. Patent No. 4,305,869 is directed to a terpolymer of methylmethacrylate, styrene, and maleic anhydride having improved heat distortion as compared to styrenic polymers. Based on the teachings in the art that maleic anhydride can improve the heat distortion temperature of a styrene polymer, and that methylmethacrylate can be copolymerized with styrene and maleic anhydride, the '869 patent teaches that the incorporation of up to 20% by weight methylmethacrylate, a lower Tg material than styrene or maleic anhydride, actually resulted in a material with a higher glass transition temperature than styrenic polymers. The '869 patent teaches, however, that if more than 20% by weight methylmethacrylate is used in the terpolymer, the improvement in the heat distortion temperature is lost.

JP—A—57153008 discloses copolymers of methylmethacrylate, maleic anhydride and styrene. However the advantages of the specified class of copolymers of the present invention are not taught or suggested.

NL—A—6605289 discloses copolymers of methyl methacrylate, maleic anhydride and styrene. However, the lowest maleic anhydride plus styrene content of the copolymer exceeds the maximum content of maleic anhydride and styrene in the copolymers of the present invention.

U.S. Patent No. 4,338,417 is also directed to a polymer alloy having high temperature stability which can be used to form hydrophilic sheets. The alloy is a blend of a styrene/maleic anhydride copolymer having a molecular weight of at least 10,000 and polymethylmethacrylate also having a molecular weight of at least 10,000. The styrene/maleic anhydride copolymer is partially hydrolyzed or protolyzed before or after the addition of the polymethylmethacrylate. Protolyzed hydrophilic polymer alloys are not, however, suitable for aircraft glazing applications.

None of the prior art patents discloses or suggests a composition which can be cast into a clear sheet which satisfactorily meets the requirements for aircraft glazing applications.

The invention seeks to provide a polymer which can be cast into a sheet which satisfies the thermal relaxation requirements for aircraft glazing applications.

The invention also seeks to provide a cast sheet which is optically clear, simple to prepare, and economically advantageous.

According to this invention there is provided copolymer comprising 93 to 95 weight percent of methyl methacrylate units and 7 to 5 weight percent of a mixture of maleic anhydride and styrene units said copolymer comprising at least 0.5 weight percent styrene units, the molar ratio of maleic anhydride to styrene units being at least one, the weight percentages being based on the weight of the three monomers.

The copolymer is a terpolymer.

The invention also provides a sheet comprising the copolymer, which sheet may be prepared by cast polymerising the monomers and such cast sheet prepared therefrom being resistant to thermal relaxation.

The copolymer may be prepared by standard sheet casting techniques. A preferred casting technique, used to prepare the samples illustrated in the examples, is described in detail below.

Preferred preparation of cast sheet:
Maleic anhydride is a solid at room temperature; however, unlike methacrylamide, it readily dissolves in methylmethacrylate monomer without the need for heating. The compatibility of minor amounts of maleic anhydride and styrene and major amounts of methylmethacrylate monomer eliminates the need to preheat the casting cell or mold to keep the monomers in solution during mold filling, as is required when methacrylamide is copolymerized with methylmethacrylate to form a cast sheet.

The monomer mixture comprising methylmethacrylate, maleic anhydride, and styrene is mixed and stirred until the maleic anhydride dissolves. Minor amounts of crosslinking agents and polymerization initiators are preferably added to the monomer mixture. Suitable crosslinking agents include allyl methacrylate, allyl acrylate, 1,4-butane diol dimethacrylate, 1,4-butane diol acrylate, ethylene glycol dimethacrylate, ethylene glycol diacrylate, 1,3-butane diol dimethacrylate, 1,3-butane diol diacrylate, 1,6-hexane diol dimethacrylate, 1,6-hexane diol diacrylate, polyethylene glycol methacrylate, polyethylene glycol diacrylate, tetraethylene glycol dimethacrylate, tetraethylene glycol diacrylate, trimethylolpropane trimethacrylate, trimethylolpropane triacrylate, 2,2-dimethyl-1,3-propane diol dimethacrylate and divinyl benzene. The crosslinking agent may be used at concentrations ranging from about 0.1 percent to about 10

**0 124 273**

percent by weight based on the weight of the total monomer mixture. The preferred crosslinking agent is allyl methacrylate at a concentration of about 0.5 weight percent.

Suitable polymerization initiators include, for example, the organic peroxides, such as methyl ethyl ketone peroxide, benzoyl peroxide; the hydroperoxides, such as cumene hydroperoxide; the peroxydicarbonates, such as diisopropyl peroxydicarbonate or di(2-ethyl hexyl) peroxydicarbonate; the persulfate type compounds, such as potassium persulfate; or catalysts, such as asobisisobutyronitrile.

Additionally, such initiators as lauroyl peroxide, 2,5 - dimethyl - 2,5 - di(t - butylperoxy)hexane, the dialkyl peroxides, e.g., diethyl peroxide, distearyl peroxide, di-(tertiary-butyl) peroxide, and di-(tertiary-amyl) peroxide, such peroxides often being designated as ethyl, propyl lauryl, oleyl, stearyl, tertiary-butyl and tertiary-amyl peroxides; the alkyl hydrogen peroxides, e.g., tertiary-butyl hydrogen peroxide (tertiary-butyl hydroperoxide), tertiary-amyl hydrogen peroxide (tertiary-amyl hydroperoxide); symmetrical diacyl peroxides, for instance, peroxides which commonly are known under such names as acetyl peroxide, propionyl peroxide, lauroyl peroxide, stearoyl peroxide, malonyl peroxide, succinyl peroxide, phthaloyl peroxide, benzoyl peroxide, fatty oil acid peroxides, e.g., coconut oil acid peroxides, unsymmetrical or mixed diacyl peroxides, e.g. acetyl benzoyl peroxide, propionyl benzoyl peroxide; terpene oxides, e.g. ascaridole; and salts of inorganic peracids, e.g. ammonium persulfate, sodium persulfate, sodium percarbonate, potassium percarbonate, sodium perborate, potassium perborate, sodium perphosphate, potassium perphosphate, potasium persulfate may be used. Other organic peroxide initiators which may be employed are the following: 1,1,3,3 - tetramethyl butyl peroxy-2,2-diethyl butyrate, 2,5 - dimethyl - 2,5 - di(neodecanoyl peroxy) hexane, 3 - methyl - 3 - (pivaloyl peroxy) butene-1, acetyl 2-chlorooctanoyl peroxide, acetyl sec-heptyl sulfonyl peroxide, t-butyl peroxyneodecanoate, 2,7 - dimethyl - 2,7 - di(pivaloyl peroxy) octane, acetyl peroxy isobutyl carbonate, tetralin hydroperoxide, tertiary-butyl diperphthalate, tertiary-butyl perbenzoate, 2,4-dichlorobenzoyl peroxide, urea peroxide, caprylyl peroxide, p-chlorobenzoyl peroxide, 2,2-bis(tertiary butylperoxy) butane, hydroxyheptylperoxide, the diperoxide of benzaldehyde.

The initiators may be used in combination in amounts ranging from about 0.01 percent to 1.0 percent by weight based on total monomers. In the process of the present invention, both a low temperature initiator and a high temperature initiator are preferably employed in combination, since the polymerization is preferably initiated at about 40°C. The use of both a low temperature initiator and a high temperature initiator is preferred for effective polymerization as the temperature will increase during the polymerization cycle. The preferred initiator system is a combination of t-butyl peracetate, a low temperature initiator, and acetyl peroxide, a high temperature initiator. The concentration of the low temperature initiator may range from about 0.00001 to about 0.15 percent by weight based on total monomers. The most preferred concentration of the low temperature initiator is 0.01 weight percent based on total monomers. The concentration of the high temperature initiator may range from about 0.00001 to about 0.15 percent by weight based on total monomers. The most preferred concentration of the high temperature initiator is 0.013 weight percent based on total monomers.

Other compounds, such as ultraviolet light stabilizers, polymerization moderators, and mold release agents, may also be added in minor amounts to the monomer mixture. These compounds, if used, are added to the monomer mixture at concentrations typically less than 1 weight percent, based on total monomer. A preferred ultraviolet light stabilizer is 2(2' - hydroxy - 5' - methylphenyl) benzotriazole manufactured by Ciba-Geigy corporation as Tinuvin P®. Polymerization moderators such as those disclosed in U.S. Patent No. 2,129,478 may be added to the monomer mixture. Mold release agents, such as lecithin, a mixture of diglycerides of stearic, palmitic, and oleic acid, may also be added to the monomer mixture in minor amounts.

The monomer mixture is preferably vacuum filtered as by a Buchner funnel with fine filter paper and/or vacuum drawn through a 2 µm final filter. This double filtration step may be used to remove any solid particle contaminants, such as dust, which could otherwise cause surface imperfections in the final sheet. This is especially important with stretched sheet, as stretching magnifies the imperfections due to dust or dirt particles. A vacuum is then placed on the stirred monomer mixture, which has been transferred to a filter flask, to degas the monomer mixture. This step is continued until gas bubbles are no longer evolved.

The monomer mixture is then polymerized into a sheet by conventional sheet casting methods. The monomer mixture may be polymerized in a preheated casting cell. Preheating the cell to about 60—70°C helps to avoid leakage during filling of the mold with monomer mixture. After the cell is filled, it is sealed and air is bled from the cell. The cell is then placed in an oven to initiate polymerization. Polymerization is preferably conducted in three stages. The first stage is a heating phase in which the monomer mixture is gradually heated from about 40°C to about 60°C over a three and one-half day period. Following the heating stage, the cell is preferably subjected to a high temperature finishing stage for about one-half a day at temperatures which are gradually increased from about 65 to about 120°C. The cell is then cooled to about 70°C.

An additional six hour post curing step at 120°C has been found to be preferred to reduce residual monomer concentrations to less than one weight percent of the starting monomers.

After polymerization is complete the cell is disassembled and the sheet is removed. The sheet is then preferably shrunk in a forced air oven for one hour at 100°C and then at 160°C for 3.5 hours.

Crosslinking the sheet under substantially strain-free conditions can improve the resistance of the

4

sheet to solvent crazing, especially in the laquer thinner test. The crosslinking impedes the ability of a solvent to move between the polymer chains. Substantially strain-free conditions most likely occur after the majority of vinyl polymerization has taken place. When allyl methacrylate is used, as the preferred crosslinking agent, reaction of the allyl double bonds begins during the post curing step while the majority of the crosslinking is effected at substantially strain-free conditions during the shrinking step. The shrinking step results in substantial strain-free condition because, during shrinking, internal strain introduced in the sheet during polymerization is released.

The desired degree of crosslinking of the sheet is determined as by a standard methylene dichloride (MDC) swelling ratio test to be about 4 to about 5 to 1. In this swelling test, a ½ inch (cube [1.25 cm (cube)] sample, weighed to the nearest 0.01 grams, is immersed in a closed container containing methylene dichloride solvent for 3 days. The sample is then removed from the solvent and dried as by blotting with filter paper. The swollen sample is then washed and the MDC swelling ratio is calculated by dividing the weight of the swollen sample cube by the weight of the initial unswollen sample cube.

The shrinking step is necessary for the cast sheet to meet the internal strain requirement (percent dimensional change requirement) for unstretched sheet as set forth in MIL-8184B. In addition, shrinking also highlights the presence of dirt or other contaminants in the sheet and therefore can be used to identify unacceptable contaminated material.

Stretching the sheet increases the impact resistance of the sheet and increases its resistance to crack formation and propagation (K factor).

Preferred stretching procedure

The shrunk sheet was stretched by the following procedure. A five inch square sample (12.7×12.7 cm) is cut from the sheet and stretched. The corners and edges of the square sample are rounded as by using a disc sander. The surface of the sample is roughened as by wet sanding so that the sample does not squirt out from between the caul plates when pressure is rapidly applied. The corners are rounded so that the material flows out uniformly under pressure with no cracking at the corners. The sample is preheated to 160—171°C (320 to 340°F) for 1 to 2 hours prior to stretching. The hot sample is then transferred to the middle of a frame insert, of about 22.5 cm (nine inches) in a square open area, between two caul plates which have been treated with a mold releasing agent. The caul plates rest on the bottom plate of an automatic hydraulic press. The press plates, caul plates, and frame insert are all preferably preheated to about 340 to 360°F. If the metal pieces holding the sample are not preheated, the metal would withdraw heat from the sample, thereby cooling the sample to a temperature below which the sample could flow sufficiently under pressure. The press is then rapidly closed and the pressure is increased to about 620 MPa (90,000 pounds per square inch). After about two to three minutes the press is cooled to about 150°F and the stretched sample is removed. The sample is cooled to below its softening point, while the pressure is maintained, to prevent relaxation which would otherwise take place. The resistance to thermal relaxation of the stretch sample may then be determined as described below.

Preferred thermal relaxation determination

The thermal relaxation of a stretched cast sheet is determined by the following procedure. The cast sheet is heated to approximately 140°C and biaxially stretched until its thickness is one-third that of its original thickness. A two inch (5 cm) circle is scribed on a three inch square (7.5×7.5 cm) specimen of a stretched sheet with perpendicular straight lines intersecting the center of the scribed circle and the perimeter of the circle. The scribed straight lines are oriented in the direction of maximum stretch and at the normal. The length of each straight line, designated as A and B, is measured to the nearest one thousandth of an inch (1/1000 inch is $2.5 \times 10^{-3}$ cm). Each sample is then subjected to 110.0°C±1.1°C and 145.0°C±5.5°C for twenty-four hours, respectively, in an aircirculating oven. After each twenty-four hour test the specimen is allowed to cool to room temperature and held at room temperature for at least three hours. Lines A and B are then remeasured to the nearest one thousandth of an inch. The percent thermal relaxation of the sample is determined by the following formula:

$$\% \text{ Thermal relaxation} = \frac{(\text{initial length} - \text{final length})}{(\text{initial length})} \times 100$$

The initial and final lengths are the averages of the initial and final A and B measurements. Aircraft glazing requirements (Military P-25690 A) are met if the percent thermal relaxation of a stretched sheet is less than or equal to 10 at 110°C and greater than or equal to 40 at 145°C.

Cast polymethylmethacrylate (homopolymer) sheet results in a percent thermal relaxation of about 40 at 110°C and, therefore, is not satisfactory for aircraft glazing applications.

Utilizing the procedures described above, a number of copolymers of methylmethacrylate, maleic anhydride, and styrene were prepared (Examples 1—9 and 11—16) to determine their resistance to thermal relaxation. The composition of the cast sheet samples and their resistance to thermal relaxation are provided in Tables II and III. It was found that the addition of about 5 weight percent maleic anhydride monomer to about 95 weight percent methylmethacrylate comonomer (Example 1) resulted in a cast sheet

5

having an improved resistance to thermal relaxation as compared to a polymethacrylate homopolymer or to a copolymer formed from about 5 weight percent styrene and about 95 weight percent methylmethacrylate (Example 9).

However, the cast sheet formed from this maleic anhydride-methylmethacrylate copolymer had a percent thermal relaxation slightly higher (11.1%) than the maximum allowable for aircraft glazing applications.

Unexpectedly, however, a cast sheet of copolymer comprising 4.5 weight percent maleic anhydride units, about 0.5 weight percent styrene units, and about 95 weight percent methylmethacrylate units (Example 2) met the thermal relaxation requirements for aircraft glazing applications at 110°C and 145°C. As the concentration of the maleic anhydride monomer was reduced to about 2.5 weight percent (Examples 3—5) while increasing the concentration of styrene monomer, keeping the total concentration of maleic anhydride and styrene to about 5 weight percent, the clear cast sheet maintained a percent thermal relaxation below the maximum allowable for aircraft glazing applications at both 110°C and 145°C. Furthermore, no haze was formed in the sheet over the temperatures employed. When the concentration of maleic anhydride monomer was reduced to below 2.5 weight percent (Examples 6—9) while increasing the concentration of styrene monomer to keep the total styrene plus maleic anhydride monomer concentration at about 5 weight percent, the resistance of the cast sheet to thermal relaxation was drastically reduced to unacceptable levels for aircraft glazing applications.

This finding apparently indicated that a copolymer formed from more than 3 weight percent styrene monomer could not be useful as a cast sheet for aircraft glazing applications. This assumption was found to be incorrect as illustrated by Examples 11—16 on Table III. These examples maintained a 1:1 molar ratio between the maleic anhydride monomer concentration and the styrene monomer concentration in the copolymer while varying the combined weight concentration of these two comonomers from about 1 to about 7 weight percent. At this 1:1 molar ratio, when the combined weight concentration was less than 5 weight percent (Examples 13—16), the cast copolymer was not satisfactory in its resistance to thermal relaxation at 110°C for aircraft glazing applications. However, when the combined weight concentration of styrene and maleic anhydride was at least 5 weight percent (Examples 11 and 12), the resulting cast sheet had adequate resistance to thermal relaxation for aircraft glazing applications.

Therefore, as little as about 5 weight percent of maleic anhydride and styrene monomers combined can be useful to form a cast copolymer sheet with methylmethacrylate for aircraft glazing applications, as long as the molar ratio of maleic anhydride monomer to styrene monomer is at least 1.

The following examples are illustrative of the present invention. All percentages are on a weight basis unless otherwise specified.

### TABLE I[1]

| Sample | 1** | 2 | 3** | 4 | 5 | 6** | 7** | 8** | 9** | 10** |
|---|---|---|---|---|---|---|---|---|---|---|
| Wt. % MAH[3] | 5.15 | 4.50 | 3.64 | 3.00 | 2.50 | 2.00 | 1.50 | 1.00 | 0.00 | 4.5[2] |
| Wt. % Styrene | 0.00 | 0.65 | 1.00 | 2.15 | 2.65 | 3.15 | 3.65 | 3.64 | 5.15 | — |
| Wt. % MMA[4] | 94.85 | 94.85 | 95.36 | 94.85 | 94.85 | 94.85 | 94.85 | 94.36 | 94.85 | 95.0 |
| % TR*, 110°C | 11.10 | 8.0 | 6.2 | 7.0 | 9.8 | 19.0 | 28.0 | 28.0 | 38.0 | 17.0 |

* TR=Thermal Relaxation, % TR at 145°C was greater than 40% for all Examples 1—10.
** represents a Comparative Example.

[1] All Examples 1—10 were prepared with 0.5% allyl methacrylate.
[2] Comparative Example 10 was prepared from 4.5% methacrylamide, 0.5% allylmethacrylate, and 95.0% methylmethacrylate.
[3] MAH=Maleic Anhydride.
[4] MMA=Methylmethacrylate.

### TABLE II

| Sample | 11 | 12[1] | 13** | 14** | 15** | 16** |
|---|---|---|---|---|---|---|
| Wt. % MAH | 3.50 | 2.50 | 2.00 | 1.50 | 1.00 | 0.5 |
| Wt. % Styrene | 3.71 | 2.65 | 2.12 | 1.59 | 1.06 | 0.53 |
| Wt. % MMA | 92.89 | 94.85 | 95.88 | 96.91 | 97.94 | 98.97 |
| % TR*, 110°C | 4.58 | 8.08[2] | 12.31 | 16.5 | 21.8 | 34.1 |

* TR=Thermal Relaxation, % TR for Examples 11—16 at 145°C was >40%.

[1] This unstretched sample was evaluated for its stress solvent crazing resistance according to MIL-8184 B and passed the isopropanil stress solvent crazing test.

[2] The difference in thermal relaxation between Example 12 and Example 5 on Table I is due to experimental error in sample preparation.

** Comparative Example.

**Claims for the Contracting States: BE, CH, DE, FR, GB, IT, LI, LU, NL, SE**

1. Copolymer comprising units of methyl methacrylate maleic anhydride and styrene, characterised in that the copolymer comprises 93 to 95 weight percent of methyl methacrylate units and 7 to 5 weight percent of a mixture of maleic anhydride and styrene units, said copolymer comprising at least 0.5 weight percent of styrene units, and the molar ratio of maleic anhydride to styrene units being at least one.

2. Copolymer as claimed in claim 1 comprising 95 weight percent of methyl methacrylate units and 5 weight percent of an equimolar mixture of maleic anhydride and styrene units.

3. Copolymer as claimed in any preceding claim further comprising 0.1 to 10%, based on total monomer weight, of a crosslinking agent.

4. A sheet, suitable for use in glazing, comprising copolymer as claimed in any preceding claim.

5. A sheet as claimed in claim 4, wherein the copolymer is prepared by cast polymerising the monomers.

6. A sheet as claimed in claim 4 or 5 in crosslinked and shrunk form.

7. A sheet as claimed in any one of claims 4 to 6 which is biaxially stretched to about one third of its initial thickness.

8. A sheet as claimed in any of claims 4 to 7 having thermal relaxation less than or equal to 10 at 110°C and greater than or equal to 40 at 145°C when measured by the U.S. Military P-21690A test procedure.

**Claims for the Contracting State: AT**

1. Method of making a copolymer from methyl methacrylate, maleic anhydride and styrene monomers characterised in that said method comprises polymerising said monomers to form a copolymer comprising 93 to 95 weight percent of methyl methacrylate units and 7 to 5 weight percent of a mixture of maleic anhydride and styrene units, said copolymer comprising at least 0.5 weight percent of styrene units, and the molar ratio of maleic anhydride to styrene units being at least one.

2. Method as claimed in claim 1, wherein the copolymer comprises about 95 weight percent of methyl methacrylate units and about 5 weight percent of an equimolar mixture of maleic anhydride and styrene units.

3. Method as claimed in any preceding claim wherein the copolymer further comprises 0.1 to 10%, based on total monomer weight, of a crosslinking agent.

4. A sheet, suitable for use in glazing, comprising copolymer as defined in any preceding claim.

5. A sheet as claimed in claim 4 wherein the copolymer is prepared by cast polymerising the monomers.

6. A sheet as claimed in claim 5 in crosslinked and shrunk form.

7. A sheet as claimed in any one of claims 4 to 6 which is biaxially stretched to about one third of its original thickness.

8. A sheet as claimed in any one of claims 4 to 7 having thermal relaxation less than or equal to 10 at 110°C and greater than or equal to 40 at 145°C when measured by the U.S. Military P 25690 A test procedure.

**Patentansprüche für die Vertragsstaaten: BE, CH, DE, FR, GB, IT, LI, LU, NL, SE**

1. Copolymer aus Einhalten von Methylmethacrylat, Maleinsäureanhydrid und Styrol, dadurch gekennzeichnet, daß das Copolymer 93 bis 95 Gew.-% Methylmethacrylateinheiten und 7 bis 5 Gew.-%

**0 124 273**

einer Mischung aus Maleinsäureanhydrid- und Styroleinheiten aufweist, dieses Copolymer mindestens 0,5 Gew.-% Styroleinheiten aufweist und das Molverhältnis von Maleinsäureanhydrid- zu Styroleinheiten mindestens 1 ist.

2. Copolymer nach Anspruch 1, enthaltend 95 Gew.-% Methylmethacrylateinheiten und 5 Gew.-% einer äquimolaren Mischung aus Maleinsäureanhydrid- und Styroleinheiten.

3. Copolymer nach einem der vorhergehenden Ansprüche, dadurch gekennzeichnet, daß es außerdem 0,1 bis 10% eines Vernetzungsmittels, bezogen auf das Gesamtgewicht der Monomere, enthält.

4. Platte, die für Verglasungszwecke geeignet ist, aus einem Copolymer gemäß einem der vorhergehenden Ansprüche.

5. Platte nach Anspruch 4, dadurch gekennzeichnet, daß das Copolymer durch Gußpolymerisation der Monomere hergestellt worden ist.

6. Platte nach Anspruch 4 oder 5 in vernetzter und geschrumpfter Form.

7. Platte nach einem der Ansprüche 4 bis 6, die biaxial bis etwa auf ein Drittel ihrer Anfangsdicke verstreckt ist.

8. Platte nach einem der Ansprüche 4 bis 7 mit einer Wärmerelaxation, die bei 110°C geringer oder gleich 10 ist und bei 145°C größer oder gleich 40 ist, gemessen nach dem Testverfahren U.S. Military P-25690A.

### Patentansprüche für den Vertragsstaat: Österreich

1. Verfahren zur Herstellung eines Copolymers aus Methylmethacrylat-, Maleinsäureanhydrid- und Styrolmonomeren, dadurch gekennzeichnet, daß dieses Verfahren die Polymerisation der Monomeren zur Bildung eines Copolymers, enthaltend 93 bis 95 Gew.-% Methylmethacrylateinheiten und 7 bis 5 Gew.-% einer Mischung von Maleinsäureanhydrid- und Styroleinheiten, umfaßt, wobei das Copolymer wenigstens 0,5 Gew.-% Styroleinheiten enthält und das Molverhältnis von Maleinsäureanhydrid- zu Styroleinheiten wenigstens 1 ist.

2. Verfahren nach Anspruch 1, dadurch gekennzeichnet, daß das Copolymer etwa 95 Gew.-% Methylmethacrylateinheiten und etwa 5 Gew.-% einer äquimolaren Mischung aus Maleinsäureanhydrid- und Styroleinheiten enthält.

3. Verfahren nach einem der vorhergehenden Ansprüche, dadurch gekennzeichnet, daß das Copolymer außerdem 0,1 bis 10% eines Vernetzungsmittels, bezogen auf das Gesamtgewicht der Monomeren enthält.

4. Platte, die für Verglasungen geeignet ist, aus einem Copolymer gemäß einem der vorhergegangenen Ansprüche.

5. Platte nach Anspruch 4, dadurch gekennzeichnet, daß das Copolymer durch Gußpolymerisation der Monomere hergestellt worden ist.

6. Platte nach Anspruch 5 in vernetzter und geschrumpfter Form.

7. Platte nach einem der Ansprüche 4 bis 6, die bis etwa auf ein Drittel ihrer Anfangsdicke verstreckt ist.

8. Platte nach einem der Ansprüche 4 bis 7 mit einer Wärmerelaxation, die bei 110°C geringer oder gleich 10 ist und bei 145°C größer oder gleich 40 ist, gemessen nach dem Testverfahren U.S. Military P-25690A.

### Revendications pour les Etats Contractants: BE, CH, DE, FR, GB, IT, LI, LU, NL, SE

1. Copolymère comprenant des motifs de méthacrylate de méthyle, d'anhydride maléique et de styrène, le copolymère étant caractérisé en ce qu'il comprend 93 à 95% en poids de motifs de méthacrylate de méthyle et 7 à 5% en poids d'un mélange de motifs d'anhydride maléique et de styrène, ledit copolymère comprenant au moins 0,5% en poids de motifs de styrène et le rapport molaire des motifs d'anhydride maléique aux motifs de styrène étant d'au moins un.

2. Copolymère comme revendiqué dans la revendication 1, comprenant 95% en poids de motifs de méthacrylate de méthyle et 5% en poids d'un mélange équimolaire de motifs d'anhydride maléique et de motifs de styrène.

3. Copolymère comme revendiqué dans l'une quelconque des revendications précédentes comprenant de plus 0,1 à 10%, par rapport au poids total des monomères, d'un agent réticulant.

4. Une feuille convenant à l'emploi dans le vitrage, comprenant un copolymère comme revendiqué dans l'une quelconque des revendications précédentes.

5. Une feuille comme revendiqué dans la revendication 4 dans laquelle le copolymère est préparé par polymérisation par coulée des monomères.

6. Une feuille comme revendiquée dans la revendication 4 ou 5 sous une forme réticulée et rétractée.

7. Une feuille comme revendiquée dans l'une quelconque des revendications 4 à 6 qui présente un étirage biaxial au tiers environ de son épaisseur initiale.

8. Une feuille comme revendiquée dans l'une quelconque des revendications 4 à 7 ayant une relaxation thermique inférieure ou égale à 10 à 110°C et supérieure ou égale à 40 à 145°C lorsqu'on la mesure selon le mode d'essai US Military P-21690A.

**Revendications pour l'Etat Contractant: AT**

1. Procédé de préparation d'un copolymère à partir de méthacrylate de méthyle, d'anhydride maléique et de styrène monomères, ledit procédé étant caractérisé en ce qu'il comprend la polymérisation desdits monomères pour former un copolymère comprenant 93 à 95% en poids de motifs de méthacrylate de méthyle et 7 à 5% en poids d'un mélange de motifs d'anhydride maléique et de motifs de styrène, ledit copolymère comprenant au moins 0,5% en pôids de motifs de styrène, et le rapport molaire des motifs d'anhydride maléique aux motifs de styrène étant d'au moins un.

2. Procédé comme revendiqué dans la revendication 1 dans lequel le copolymère comprend environ 95% en poids de motifs de méthacrylate de méthyle et environ 5% en poids d'un mélange équimolaire de motifs d'anhydride maléique et de motifs de styrène.

3. Procédé comme revendiqué dans l'une quelconque des revendications précédentes dans lequel le copolymère comprend de plus 0,1 à 10%, par rapport au poids total des monomères, d'un agent réticulant.

4. Une feuille convenant à l'emploi pour le vitrage, comprenant un copolymère comme défini dans l'une quelconque des revendications précédentes.

5. Une feuille comme revendiqué dans la revendication 4, dans laquelle le copolymère est préparé par polymérisation par coulée des monomères.

6. Une feuille comme revendiqué dans la revendication 5 sous une forme réticulée et rétractée.

7. Une feuille comme revendiqué dans l'une quelconque des revendications 4 à 6 qui a été soumise à un étirage biaxial au tiers environ de son épaisseur d'origine.

8. Une feuille comme revendiqué dans l'une quelconque des revendications 4 à 7 ayant une relaxation thermique inférieure ou égale à 10 à 110°C et supérieure ou égale à 40 à 145°C lorsqu'on la mesure selon le mode d'essai US Military P 25690 A.